Europäisches Patentamt

European Patent Office

Office européen des brevets

(19)

(11) Publication number : **0 509 847 A2**

# EUROPEAN PATENT APPLICATION

(12)

(21) Application number : 92303543.0

(22) Date of filing : 21.04.92

(51) Int. Cl.⁵ : **G01N 21/41**

(30) Priority : **19.04.91 JP 115480/91**

(43) Date of publication of application :
**21.10.92 Bulletin 92/43**

(84) Designated Contracting States :
**CH DE FR GB LI**

(71) Applicant : **Kabushiki Kaisha TOPCON**
**75-1, Hasunuma-cho Itabashi-ku**
**Tokyo (JP)**

(72) Inventor : **Gisin, Nicolas**
**12, ch. Chapendal 1206**
**Geneva (CH)**
Inventor : **Stamp, Patrick**
**20, rue J.Dalphin,**
**CH-1227 Carouge, (CH)**
Inventor : **Hori, Nobuo, c/o Kabushiki Kaisha**
**Topcon**
**75-1, Hasunuma-cho, Itabashi-ku**
**Tokyo-to (JP)**

(74) Representative : **Maggs, Michael Norman et al**
**Kilburn & Strode 30 John Street**
**London WC1N 2DD (GB)**

(54) **Measuring the cross-sectional distribution of the refractive index of optical waveguides.**

(57) Apparatus for measuring the cross-sectional distribution of the refractive index of an optical waveguide (1) including an optical waveguide portion (3) and a substrate portion (2) includes a projection system for radiating a focussed beam of light onto to one end surface of the optical waveguide portion (3) and a light receiving unit (5) arranged so that, in use, light leaking from the optical waveguide (1) is incident on it, whereby the change in the amount of light incident on the light receiving unit as the point of incidence of the focussed beam of light is moved over the end surface of the optical waveguide portion is indicative of the cross-sectional distribution of the refractive index of the optical waveguide. The light receiving unit (5) is so constructed or so positioned relative to the optical waveguide (1) that that portion of the leaking light (4) closest to the optical waveguide (1) is not incident on the light receiving unit (1) but passes between the light receiving unit (5) and the optical waveguide.

FIG.6

EP 0 509 847 A2

The present invention relates to apparatus for measuring the cross-sectional distribution of the refractive index of an optical waveguide for use in e.g. optical communications.

One method of measuring the cross-sectional distribution of the refractive index of an optical waveguide is the so-called refracted near field method (RNF method). The RNF method is non-destructive and provides a high measurement accuracy and a high resolution and is considered to be an excellent method of measuring the cross-sectional distribution of the refractive index of an optical waveguide.

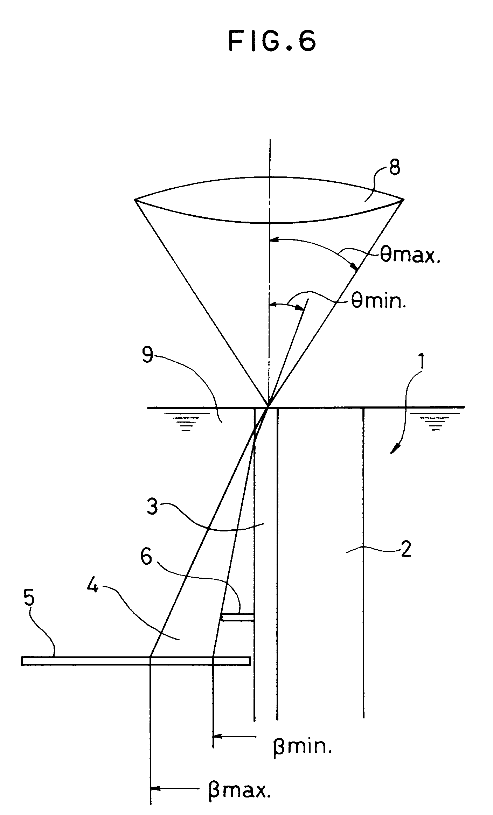

The general principle of the RNF method is illustrated schematically in Figure 6 of the accompanying drawings. An optical waveguide substrate 1 comprising an optical waveguide portion 3 on one side of a substrate portion 2 is immersed in a liquid 9 having refractive index of $n_L$, which is close to the refractive index n(r) of the optical waveguide portion 3. A laser beam is focussed by an objective lens 8 onto the end surface of the optical waveguide portion 3 at a maximum angle of incidence θ, and the light leaking out of the optical waveguide portion 3 is detected and the refractive index of the optical waveguide portion 3 is measured.

If the refractive index of the optical waveguide portion 3 at the point where the laser beam enters it is n(r) and if the refractive index of the air or the liquid on the incident side of the optical waveguide portion 3 is $n_o$, the exit angle β of the laser beam relative to the incident angle θ is given simply by the following equation (1) in accordance with Snell's law:

$$n^2 (r) = n_o^2 \sin^2 \theta + n_L^2 \cos^2 \beta \quad (1)$$

Therefore, when the point of incidence of the laser beam is scanned across the thickness of the optical waveguide portion 3 or in the direction perpendicular thereto, the exit angle β changes according to the refractive index n(r) at each point. Specifically, the exit angle β decreases at those points having a higher refractive index and increases at those points having a lower refractive index.

Accordingly, by measuring the parameters of the leaking light, the refractive index n(r) of the optical waveguide portion 3 can be obtained.

Apparatus for measuring the cross-sectional distribution of the refractive index of an optical waveguide utilising the RNF method is based on the above principle.

Referring again to Figure 6, a detector 5 for receiving the light 4 leaking out of the optical waveguide portion 3 is provided beside, i.e. laterally adjacent, the optical waveguide portion 3. Also, a shield plate 6 comprising a semi-circular disk is provided for shielding that portion of the leaking light 4 closest to the optical waveguide portion 3. The detector 5 receives the leaking light 4 in a semi-annular shape, i.e. that portion of the light which is closest to the optical waveguide portion 3 is not received. The amount of light received is given by the following equation (2), in which the maximum angle of the incident light to the optical axis at the light receiving point, i.e. the focal point of the lens 8, is $\theta_{max}$ and the angle corresponding to that at which the incident light just passes the shield plate 6 is $\theta_{min}$.

$$P = \int_{\cos\theta_{max}}^{\cos\theta_{min}} I(\theta) \cdot d(\cos\theta) \quad (2)$$

In the above equation, I(θ) represents the intensity distribution of the incident light based on the angle of incidence. By making the light receiving surface of the detector 5 sufficiently large, all the leaking light 4 is received by the light receiving surface. Therefore, $\theta_{max}$ in the above equation (2) is determined by the numerical aperture (NA) and is given by the following equation (3):

$$n_o \sin\theta_{max} = NA \quad (3)$$

The maximum exit angle $\beta_{max}$ of the leaking light changes in accordance with the refracting power of the optical waveguide portion 3, that is to say, as the point of incidence of the light on the detector 5 on the outermost side is moved, and is primarily determined by the point where the light enters the optical waveguide portion 3 and also by the position of the edge of the shield plate 6 and is not influenced by the refractive index of the optical waveguide portion 3.

Furthermore, the angle of incidence $\theta_{min}$ corresponding to the minimum exit angle $\beta_{min}$ is given by the following equation (4), which is a variant of equation (1).

$$n_o^2 \sin^2 \theta_{min} = n^2 (r) - n_L^2 \cos^2 \beta_{min} \quad (4)$$

The angle of incidence $\theta_{min}$ is an important factor for determining the refractive index of the optical waveguide portion 3. Specifically, the value for the amount of light obtained by the above equation (2) changes in accordance with the refractive index.

If it is supposed that the quantity of light received at an arbitrary point in the direction of the thickness of the optical waveguide portion 3 or the direction perpendicular thereto is P(n(r)), the value of P(n(r)) is given by the following equation (5):

$$P(n(r)) = \int_{\cos\theta_{max}}^{\cos\theta_{min}(n(r))} I(\theta) \cdot d(\cos\,\theta) \qquad (5)$$

If the angular dependency $I(\theta)$ of the incident light intensity has a Lambert distribution $[I(\theta) = I_o \cos\,\theta]$, equation (6) below is obtained from equation (5), and a correction factor $\Lambda n\,(r)$ can be obtained when the laser spot position is scanned in the direction of the thickness of the optical waveguide portion, or the direction perpendicular thereto and the change of light quantity $\Lambda P$ is measured.

$$\Lambda P = a \cdot \Lambda n(r) \quad (6)$$

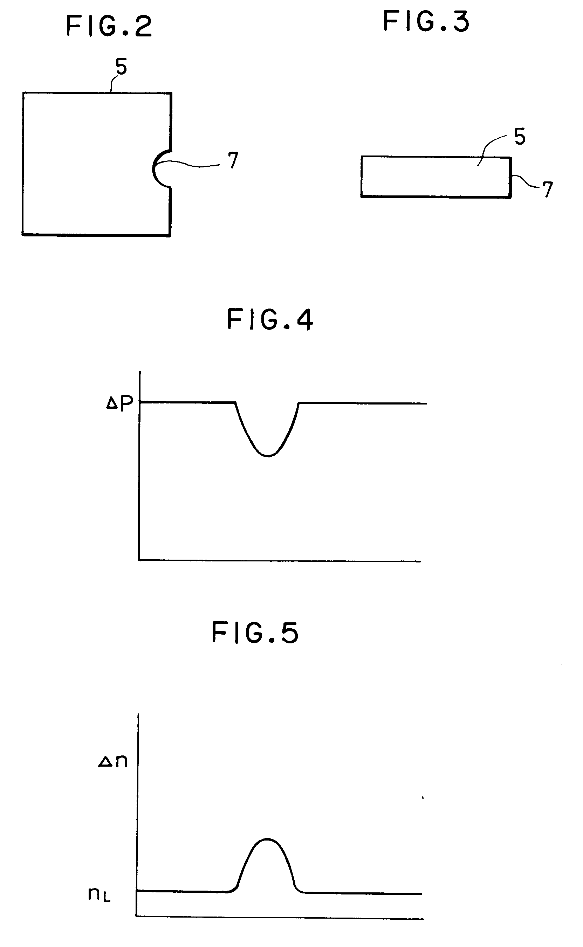

The proportional constant a is determined by the refractive index $n_L$ which is already known. The relationship between $\Lambda n$ and $\Lambda P$ is shown in the diagrams of Figures 4 and 5. These Figures show the change in the light quantity and the change in the refractive index which are obtained when the laser spot position is scanned in the direction of the thickness of the optical waveguide portion.

Normally, a laser beam is used as the light source. In this case, the incident light intensity distribution $I\,(\theta)$ is a Gaussian distribution rather than a Lambert distribution, and the change in the light quantity and the change in the refractive index are not so simple as in equation (6). The correction factor $\Lambda n(r)$ can, however, be obtained by calculation.

As described above, if the cross-sectional distribution of the refractive index of an optical waveguide is measured using a conventional apparatus, a shield plate is provided to shield that part of the leaking light which is closest to the optical axis. The waveguide to be measured is extremely small and the range of the leaking light is extremely limited. Therefore, when a shield plate is to be provided, there are considerable restrictions on the method of supporting it, its shape, etc., and this results in troublesome and difficult procedure.

It is the object of the present invention to provide apparatus for measuring the cross-sectional distribution of the refractive index of an optical waveguide without using a shield plate.

According to the present invention apparatus for measuring the cross-sectional distribution of the refractive index of an optical waveguide including an optical waveguide portion and a substrate portion comprises means for holding the optical waveguide in a predetermined position, a projection system for radiating a focussed beam of light to one end surface of the optical waveguide portion and a light receiving unit arranged so that, in use, light leaking from the optical waveguide is incident on it, whereby the change in the amount of light incident on the light receiving unit at the point of incidence of the focussed beam of light is moved over the end surface of the optical waveguide portion is indicative of the cross-sectional distribution of the refractive index of the optical waveguide, and is characterised in that the light receiving unit is so constructed or so positioned relative to the optical waveguide that that portion of leaking light closest to the optical waveguide is not incident on the light receiving unit but passes between the light receiving unit and the optical waveguide or is absorbed by some portion of the light receiving unit other than its light receiving surface or by some other component.

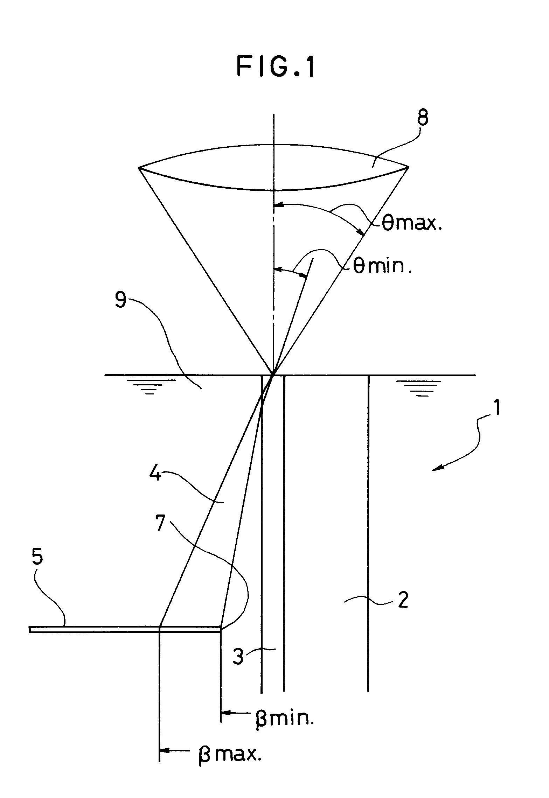

Further features and details of the invention will be apparent from the following description of one specific embodiment which is given with reference to Figures 1 to 5 of the accompanying drawings, in which:-

Figure 1 is a schematic side view of the basic configuration of an embodiment of the invention;

Figure 2 shows the shape of the light receiving unit used in the present invention;

Figure 3 is a view of an alternative shape of the light receiving unit which may be used in the present invention;

Figure 4 is a graph showing the change in the amount of light received by the light receiving unit as the laser spot is moved; and

Figure 5 is a graph showing the change in refractive index of the optical waveguide unit as the laser spot is moved.

Those components which are the same as in Figure 6 are designated by the same reference numerals.

The light receiving unit or at least the light receiving surface of the detector 5, is sufficiently extensive that even the outermost edge of the leaking luminous flux or light 4 is incident on it. The inner edge 7 of the light receiving surface, i.e. the edge which is closest to the optical axis is positioned within the leaking light 4, so that the portion of the leaking light closer to the optical axis is not received. The exit angle $\beta$ of the leaking light incident on the edge 7 of the light receiving surface of the detector 5 has the value $\beta_{min}$ in equation 4.

When the incident point of the laser beam is scanned in the direction of the thickness of the optical waveguide portion 3, or the direction perpendicular thereto, a computing element (not shown) calculates the distribution of the refractive index in accordance with equations (5) and (6) based on signals from the detector 5.

3

Various shapes are possible for the detector 5, such as that shown in Figure 2, in which it has an extensive planar light receiving surface in which a part-circular cut-out portion is provided at the position closest to the optical axis, or that shown in Figure 3, in which it has an elongate rectangular shape and its inner edge 7 is spaced by an appropriate distance away from the optical waveguide portion 3.

Thus the apparatus of the present invention is considerably simpler than the known apparatus because there is no need to provide a shield plate in the optical path.

## Claims

1. Apparatus for measuring the cross-sectional distribution of the refractive index of an optical waveguide including an optical waveguide portion and a substrate portion, the apparatus comprising a projection system for radiating a focussed beam of light onto one end surface of the optical waveguide portion and a light receiving unit arranged so that, in use, light leaking from the optical waveguide is incident on it, whereby the change in the amount of light incident on the light receiving unit as the point of incidence of the focussed beam of light is moved over the end surface of the optical waveguide portion is indicative of the cross-sectional distribution of the refractive index of the optical waveguide characterised in that the light receiving unit (5) is so constructed or so positioned relative to the optical waveguide that that portion of the leaking light (4) closest to the optical waveguide is not incident on the light receiving unit (5) but passes between the light receiving unit (5) and the optical waveguide.

2. Apparatus as claimed in claim 1, characterised in that the light receiving unit (5) has a planar light receiving surface in one edge of which there is a part-circular cut-out portion, the edge (7) of which is spaced, in use, from the optical waveguide portion (3).

3. Apparatus as claimed in claim 1, characterised in that the light receiving unit (5) has an elongate light receiving surface, the edge of which closest, in use, to the optical waveguide portion (3) is spaced from the optical waveguide portion (3).

# FIG.1

FIG.2

FIG.3

5

7

5

7

FIG.4

ΔP

FIG.5

Δn

n_L

# FIG.6